# EUROPÄISCHE PATENTSCHRIFT

(11) **EP 0 650 113 B1**
(45) Veröffentlichungstag und Bekanntmachung des Hinweises auf die Patenterteilung: **06.05.1999**
(21) Anmeldenummer: 94112080.0
(22) Anmeldetag: 03.08.1994
(51) Int. Cl.: G05F 7/00, H02P 13/06, G06F 3/023

(54) **Verfahren zur Parametrierung eines digitalen Spannungsreglers für die Steuerung von Transformatoren mit Stufenschalter**
Method of paramatrisation of a digital voltage regulator for controlling a transformer with a step switch
Méthode de paramétrisation d'un régulateur de tension numérique pour la commande d'un transformateur avec un commutateur à plots

(30) Priorität: 26.10.1993 DE 4336438
(43) Veröffentlichungstag der Anmeldung: 26.04.1995
(73) Patentinhaber: MASCHINENFABRIK REINHAUSEN GmbH, 93059 Regensburg (DE)
(72) Erfinder: Okanik, Peter, Dipl.-Ing., D-93128 Regenstauf (DE)

(56) Entgegenhaltungen:
- EP-A- 0 367 626
- US-A- 4 406 945
- US-A- 4 568 927
- US-A- 4 947 396
- PATENT ABSTRACTS OF JAPAN vol. 017 no. 437 (E-1413) ,12.August 1993 & JP-A-05 091387 (SONY CORP) 9.April 1993,
- BETRIEBSANWEISUNG, Nr. 66, 1989 DEUTSCHLAND, MASCHINENFABRIK REINHAUSEN 'ELEKTRONISCHER SPANNUNGSREGLER MK20'

## Beschreibung

Die Erfindung betrifft ein Verfahren zur Parametrierung eines digitalen Spannungsreglers mit einer digitalen Anzeige und Funktionstasten zur Steuerung von Transformatoren mit Stufenschalter.

Die Ansteuerung eines Motorantriebes des Stufenschalters, der nach dem Prinzip der Schrittschaltung arbeitet, mit einem Steuerimpuls bewirkt eine Betätigung des Stufenschalters und damit eine Spannungsänderung des Transformators um eine Stufe.

Der Steuerimpuls wird dabei als Steuerbefehl "Höher" oder "Tiefer" vom Spannungsregler an den Motorantrieb gegeben, wenn der jeweilige Spannungs-lstwert in vorgegebenenen Grenzen vom Spannungs-Sollwert abweicht.

Ein allgemeines Verfahren zur Parametrierung, nicht speziell für Spannungsregler, ist aus der EP-A-0367 626 bereits bekannt.

Bei diesem Verfahren wird im Ruhezustand ein Istwert angezeigt, durch ein- oder mehrmaliges Drükken einer Funktionstaste wird der intem im Regler jeweils zugeordnete Parameter identifiziert und ausgewählt, nachfolgend wird der Einstellwert des der aktivierten Funktionstaste zugeordneten Parameters angezeigt, anschließend wird durch Tendenzbetätigung eines Impulsgebers bei aktivierter Funktionstaste in Richtung "Höher" oder "Tiefer" der jeweils nächstgrößere bzw. nächstkleinere Einstellwert des gewählten Parameters eingestellt und gleichzeitig angezeigt und dieser Vorgang wird wiederholt, bis der entsprechend gewählte Parameter den gewünschten Wert hat.

Zur Parametrierung digitaler Spannungsregler ist es weiterhin bei Geräten mit einer einfachen alphanumerischen Anzeige bereits bekannt, die einzelnen Parameter nach Betätigung einer Auswahlliste im Kreis der Reihe nach anzuzeigen und zu bearbeiten. Da in den meisten Fällen der Meßwert der Istspannung bzw. die prozentuale Abweichung vom Sollwert permanent angezeigt werden, muß die Anzeige auf den Parametriervorgang entsprechend umgeschaltet werden. Eine gezielte, verzögerungsfreie Abfrage eines bestimmten ausgewählten Einstellwertes ist nicht möglich.

Darüber hinaus ist es bekannt, für die Parametrierung eine numerische Tastatur zu verwenden. Über einen entsprechend an der Tastatur gewählten Code können die einzelnen Parameter angesprochen und angezeigt werden. Nachteilig dabei ist, daß der jeweilige Bedienende eine entsprechende Codeliste benötigt, die die Zuordnung der jeweiligen auswählbaren Parameter zum entsprechenden Code beinhaltet. Eine solche Codeliste ist wegen der großen Anzahl notwendiger Parametereinstellungen an einem komplexen Regler wenig praktikabel und kann, werden die oft langen Kontroll- bzw. Einstellintervalle berücksichtigt, leicht verloren gehen, so daß sie dem Bediener jedenfalls dann oft nicht zur Verfügung steht, wenn sie benötigt wird.

Es ist schließlich auch bekannt, für jede Einstellung der Variablen einen mehrfachen BCD-Codierschalter vorzusehen. Diese Lösung ist jedoch teuer und hat einen relativ hohen Platzbedarf.

Neben diesen technischen Aspekten bei der Parametrierung digitaler Regler im allgemeinen und im besonderen digitaler Spannungsregler sind auch noch Gesichtspunkte bedeutsam, die in der Person des Bedienden liegen. So müssen Fehlbedienungen und damit zusammenhängend unbeabsichtigte Verstellungen eingestellter Parameter auch bei der Handhabung durch weitestgehend ungeschultes Personal vermieden werden, die Bedienung muß jedoch trotzdem einfach sein und muß, wie bereits ausgeführt, auch nach längerer Zeit ohne Rückgriff auf Tabellen, Manuals o.ä. möglich sein. Diesen subjektiven Anforderungen werden die bekannten Parametrierverfahren nur unzureichend gerecht.

Aufgabe der Erfindung ist es, ein für digitale Spannungsregler geeignetes Parametrierverfahren anzugeben, das leicht durchführbar ist, bei hohem Bedienkomfort Fehlbedienungen weitestgehend ausschließt und für den Bedienenden einen einfachen Zugriff auf die einzelnen Parameter, sowohl hinsichtlich der Anzeige ihres jeweiligen gegenwärtigen Wertes bzw. ihrer Größe als auch hinsichtlich ihrer gezielten Veränderung durch Neuparametrierung, gestattet.

Diese Aufgabe wird erfindungsgemäß durch ein Parametrierverfahren mit den Merkmalen des 1. Patentanspruches gelöst. Der Unteranspruch betrifft eine besonders vorteilhafte Weiterbildung der Erfindung.

Das erfindungsgemäße Parametrierverfahren weist zahlreiche Vorteile auf:

Zum einen ist durch die notwendige "Zweihandbedienung" zur Parameterverstellung, d.h. das gleichzeitige Gedrückthalten der jeweiligen Funktionstaste und Betätigen des Inkrementgebers, eine unbeabsichtigte Parameterveränderung praktisch ausgeschlossen. Gleichzeitig ist durch das automatische Abspeichem des jeweiligen Wertes beim Loslassen der entsprechenden Funktionstaste sichergestellt, daß dieses Abspeichem nicht irrtümlich vergessen werden kann - insgesamt ist eine hohe Sicherheit gegen Fehlbedienung gegeben.

Ein weiterer Vorteil des erfindungsgemäßen Verfahrens besteht darin, daß eine direkte, unverzögerte Überprüfung und ggf. Korrektur jedes Einstellparameters ohne die Notwendigkeit einer separaten Umschaltung auf den eigentlichen Parametriervorgang möglich ist.

Schließlich besteht ein wesentlicher Vorteil des erfindungsgemäßen Verfahrens dann, daß durch die eindeutige Zuordnung jedes Einstellparameters zu einer Taste die Parametrierung des gesamten Gerätes sehr einfach und vor allem ohne (u.U. nicht mehr auffindbare) Codelisten oder sonstige Hilfsmittel möglich ist.

Das in Anspruch 2 niedergelegte Verfahren ist um Verfahrensschritte zur Überprüfung der gespeicherten Parameterwerte erweitert. Dadurch ist sichergestellt, daß ein möglicherweise durch elektrische, elektromagnetische oder elektrostatische Störungen verfälschter Inhalt des nichtflüchtigen Speichers erkannt und gemeldet wird. Gleichzeitig wird bis zur Überprüfung der Einstellwerte und erforderlichenfalls deren Korrektur die Ausgabe der Steuerimpulse "Höher" und "Tiefer" an den Motorantrieb blockiert; das fehlerhafte Regelverhalten auf Grund verfälschter Parameterwerte kann nicht zu Fehlschaltungen am Transformator führen.

Zwar ist aus der US-A-4 947 396 ein Verfahren zur Prüfsummenbildung bekannt. Es betrifft aber ein Verfahren zur Überprüfung von Daten eines On-line-Computersystems mit einem Host und einer Terminaleinheit und ist für ein gattungsgemäßes Parametrierverfahren nicht anwendbar.

Die Erfindung soll nachfolgend beispielhaft noch näher erläutert werden.

Die Figuren zeigen:
- Fig. 1: eine Flußdarstellung des Verfahrens nach Anspruch 1
- Fig. 2: eine zweite Flußdarstellung des Verfahrens nach Anspruch 2
- Fig. 3: ein schematisches Blockschaltbild eines Spannungsreglers zur Steuerung von Transformatoren mit Stufenschalter zur Durchführung der Verfahren nach Anspruch 1 oder 2.
- Fig. 4: ein mögliches Bedienpaneel eines solchen Spannungsreglers.

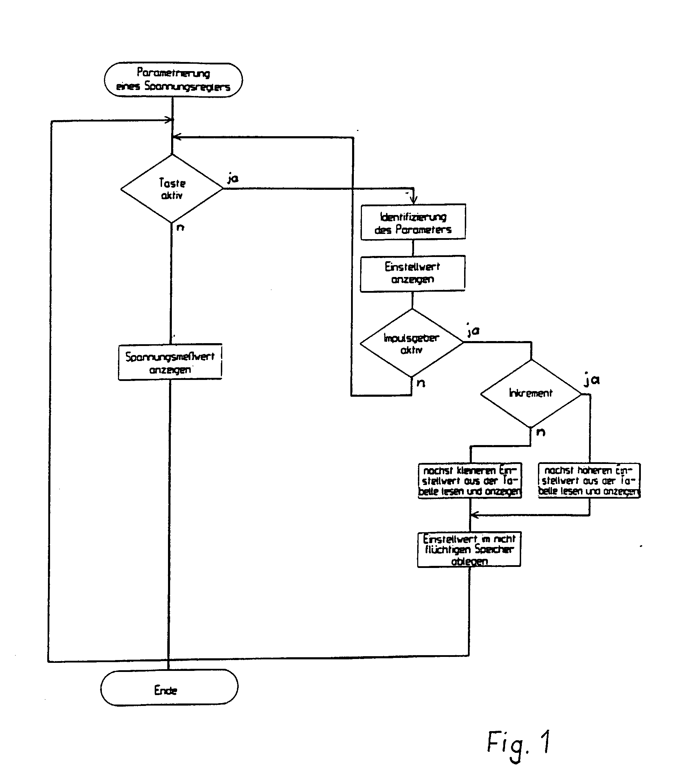

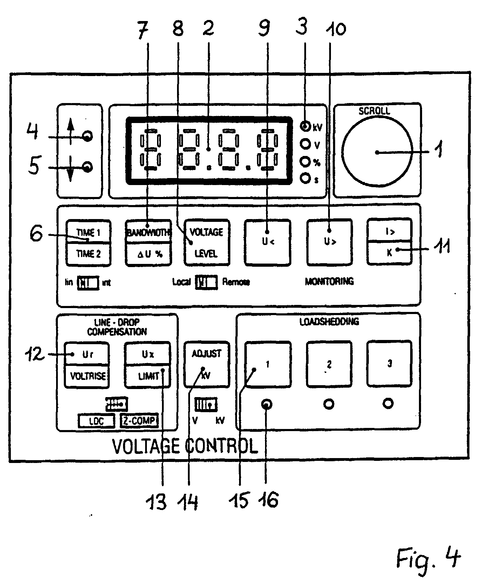

Aus Fig. 1 ist der Ablauf des Verfahrens gemäß Anspruch 1 ersichtlich; die angesprochenen Bedien- und Anzeigeelemente zur Durchführung des Verfahrens sind beispielhaft in Fig. 4 dargestellt. Im Normalzustand, d.h. wenn keine Parametrierung vorgenommen wird oder werden soll, zeigt eine Digitalanzeige 2 den jeweiligen Spannungsmeßwert, d.h. Istwert der Spannung, ständig an. Den unterschiedlichen Parametem, die an der Digitalanzeige 2 angezeigt und bei Bedarf neu parametriert werden können, sind Funktionstasten 6...15 zugeordnet. Die Parameterveränderung selbst erfolgt durch ein Scrollrad 1.

Das Verfahren selbst läuft folgendermaßen ab:
1. Ruhezustand: der Spannungs-lstwert wird angezeigt.
2. Parameterauswahl: durch Drücken einer der Funktionstasten 6...15 wird der entsprechende Parameter ausgewählt; die jeweilige Funktionstaste ist aktiviert.
3. Der der jeweiligen Funktionstaste fest zugeordnete Parameter wird erkannt und an der Digitalanzeige 2 angezeigt, solange die jeweilige Funktionstaste gedrückt bleibt.
4. Gleichzeitig wird durch das Drücken und Gedrückthalten einer (beliebigen) Funktionstaste ein Scrollrad als Impulsgeber freigegeben.
5. Durch Drehung des Scrollrades, d.h. Betätigung in Richtung "Höher" oder "Tiefer" bzw. "Mehr" oder "Weniger" wird der jeweils nächstgrößere bzw. nächstkleinere Einstellwert des gewählten Parameters aus einem tabellarischen Speicher ausgelesen und in einem nichtflüchtigen Speicher, einem NOVRAM, batteriegepufferten RAM, EEPROM etwa, abgelegt.
6. Dieser Vorgang kann durch wiederholte Betätigung des Scrollrades beliebig oft wiederholt werden, bis der entsprechend gewählte Parameter den gewünschten Wert hat.
7. Die jeweilige Funktionstaste wird, wenn der gewünschte Wert erreicht ist, losgelassen; die Digitalanzeige 1 zeigt wieder den Spannungsmeßwert an, das Scrollrad ist deaktiviert, der neue Parameterwert ist gespeichert.
8. Durch Drücken einer anderen Funktionstaste kann sowohl die Anzeige des jeweiligen anderen Parameters als auch durch Betätigung des Scrollrades bei gleichzeitig gedrücktgehaltener Funktionstaste deren Neuparametrierung auf die gleiche Weise vorgenommen werden; die Verfahrensschritte 1 bis 7 wiederholen sich entsprechend.

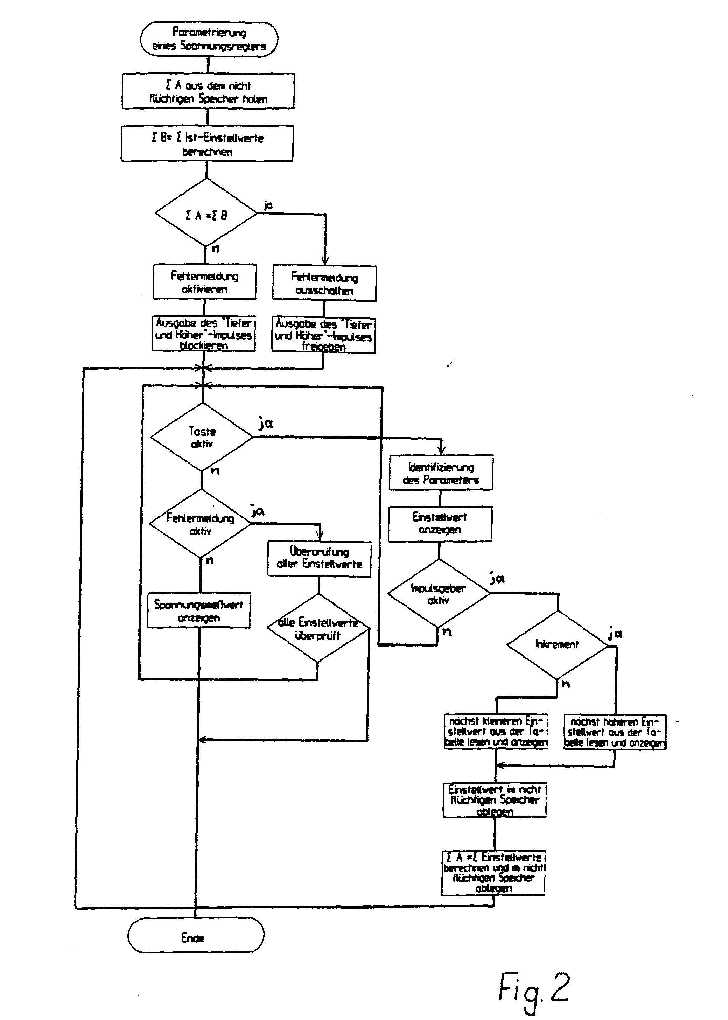

Fig. 2 zeigt eine zweite Flußdarstellung des erweiterten Verfahrens gemäß Anspruch 2. Es ist ersichtlich, daß vor der eigentlichen Parametrierung überprüft wird, ob der Inhalt des nichfflüchtigen Speichers noch korrekt die abgespeicherten Parameter enthält oder möglicherweise durch die oben beschriebenen Einflüsse verfälscht ist. Dazu werden die im Speicher abgelegten Parameterwerte summiert, und diese Summe wird mit der Summe der Einstellwerte verglichen. Ergibt dieser Vergleich keine Übereinstimmung, d.h. ist der Inhalt des nichfflüchtigen Speichers verfälscht, wird eine Fehlermeldung aktiviert und die Ausgabe des "Höher"- bzw. "Tiefer"-Impulses blockiert. In diesem Fall müssen alle Einstellwerte überprüft werden, bis der Fehler beseitigt ist. Die eigentliche Parametrierung verläuft nach den gleichen Verfahrensschritten, wie die des Verfahrens nach Anspruch 1. In Ergänzung dieses Verfahrens wird lediglich, noch nachdem der neue Einstellwert im nichfflüchtigen Speicher abgelegt ist, aus den neu abgelegten Einstellwerten die arithmetische Summe gebildet, die wiederum als Ausgangspunkt für die Kontrolle des Speicherinhaltes des nichfflüchtigen Speichers dient.

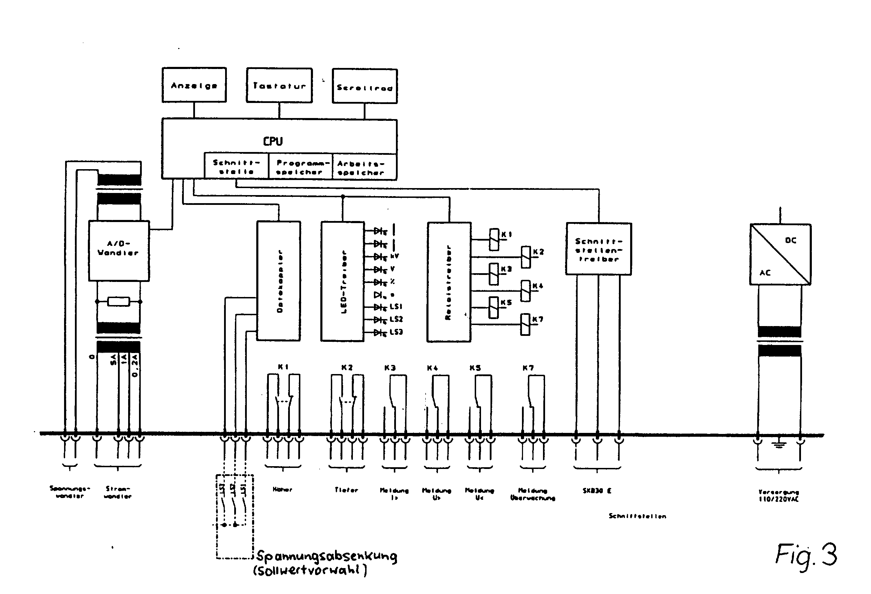

Fig. 3 zeigt schematisch das Blockschaltbild eines Spannungsreglers, mit dem die beschriebenen Parametrierverfahren durchführbar sind. Es ist ersichtlich, daß diesem Spannungsregler über Spannungs- bzw. Stromwandler die entsprechenden Eingangsgrößen vom zu regelnden Transformator über einen A/D-Wandler zugeführt werden.

Die CPU steht über Steuerleitungen mit einem Optokoppler, einem LED-Treiber und einem Relaistreiber sowie zusätzlich einem Schnittstellentreiber in Verbindung.

Fig. 4 zeigt eine vorteilhafte Anordnung eines Bedienpaneels eines solchen Spannungsreglers.

Das Scrollrad 1 ist der Impulsgeber. Eine Digitalanzeige 2, im einfachsten Fall eine einzeilige 7-Segment-LED-Anzeige, dient zur Anzeige des Spannungsmeßwertes im Ruhezustand und des jeweils durch Betätigung einer Funktionstaste 6...15 gewählten Parameters im aktivierten Zustand, d.h. solange die jeweilige Funktionstaste gedrückt bleibt. Weitere LED-Anzeigen 3 markieren durch Aufleuchten die jeweilige Einheit. Weitere LED-Anzeigen 4, 5 markieren das entsprechende Vorsignal in Richtung "Höher" oder "Tiefer", d.h. das Überschreiten der Regelabweichung über die eingestellte Empfindlichkeit.

Schließlich sind die bereits beschriebenen Funktionstasten 6...15 vorgesehen, die den jeweils auswählbaren Parametem zugeordnet sind.

Es ist natürlich auch möglich, eine Funktionstaste mit mehreren Parametem zu belegen, um die Anzahl von Tasten reduzieren zu können. Die Auswahl des jeweiligen Einstellparameters wird in einem solchen Fall durch das mehrmalige Betätigen der Taste und mit Hilfe eines Softwareumschalters realisiert. Zur Erreichung einer hohen Bediensicherheit wird man jedoch sinnvollerweise einer Funktionstaste nicht mehr als zwei Parameter zuordnen. Im gewählten Beispiel sind den Funktionstasten folgende Parameter zugeordnet:
6 -Schaltverzögerung 1/Schaltverzögerung 2
7 -Empfindlichkeit/Trendanzeige
8 -Sollwert
9 -Unterspannungsblockierung
10 -Überspannungserfassung
11 -Überstromblockierung/Nennstromfaktor
12 -Ur(LDC)/Spannungsanhebung
13 -Ux(LDC)/Spannungsbegrenzung
14 -Istwert in kV
15 -Spannungsabsenkung

Durch das Scrollrad 1 kann während des Drückens einer der beschriebenen Funktionstasten der gewünschte Parameter oder die gewünschte Funktion eingestellt werden. Durch Rechtsdrehen erfolgt eine Zunahme der Zahlengröße, durch Linksdrehen eine Abnahme. Der beim Loslassen der Funktionstaste angezeigte Wert wird gespeichert.

## Patentansprüche

1. Verfahren zur Parametrierung eines digitalen Spannungsreglers mit einer digitalen Anzeige (2) und Funktionstasten zur Steuerung von Transformatoren mit Stufenschalter,
wobei im Ruhezustand ein Istwert angezeigt wird,
durch ein- oder mehrmaliges Drücken einer Funktionstaste (6-15) der intern im Regler jeweils zugeordnete Parameter identifiziert und ausgewählt wird,
der Einstellwert des der aktivierten Funktionstaste (6-15) zugeordneten Parameters angezeigt wird,
durch Tendenzbetätigung eines Impulsgebers (1) bei aktivierter Funktionstaste (6-15) in Richtung "Höher" oder "Tiefer" der jeweils nächstgrößere bzw. nächstkleinere Einstellwert des gewählten Parameters eingestellt und gleichzeitig angezeigt und wobei dieser Vorgang wiederholt wird, bis der entsprechend gewählte Parameter den gewünschten Wert hat,
dadurch gekennzeichnet,
daß der im Ruhezustand angezeigte Istwert stets ein Spannungsistwert ist,
daß die jeweilige Funktionstaste (6-15) aktiviert bleibt, solange sie gedrückt wird,
daß der Impulsgeber (1) ein Scrollrad ist,
daß der jeweils nächstgrößere bzw. nächstkleinere Einstellwert dadurch eingestellt wird, daß er aus einem festen Speicher ausgelesen und in einem nichtflüchtigen zweiten Speicher abgelegt wird
und daß, wenn der gewünschte Parameterwert erreicht ist, die bis dahin gedrückte und damit aktivierte jeweilige Funktionstaste (6-15) durch Loslassen deaktiviert wird, gleichzeitig der eingestellte Parameterwert gespeichert wird und wieder der Spannungsistwert angezeigt wird.

2. Verfahren nach Anspruch 1,
dadurch gekennzeichnet,
daß im Ruhezustand vor dem ein- oder mehrmaligen Drücken einer Funktionstaste (6-15) die Summe der im nichfflüchtigen Speicher abgelegten Parameter mit der Summe der Ist-Einstellwerte dieser Parameter verglichen wird,
daß, wenn diese Werte nicht übereinstimmen, eine Fehlermeldung aktiviert und die Ausgabe von Steuerimpulsen blockiert wird, bis nach Neuparametrierung aller Einstellwerte die Summe der verglichenen Werte wieder übereinstimmt und die Fehlermeldung deaktiviert wird,
und daß nach dem Auslesen des jeweils nächstgrößeren bzw. nächstkleineren Einstellwertes die Summe aller Einstellwerte neu berechnet und ebenfalls im nichfflüchtigen Speicher abgelegt wird.

## Claims

1. Method for the parametering of a digital voltage regulator with a digital display (2) and function keys for the control of transformers with tap selector switches, wherein an actual value is indicated in the rest state, the parameter respectively associated internally in the regulator is identified and selected by single or repeated depression of a function key (6 to 15), the set value of the parameter associated with the activated function key (6 to 15) is indicated, the respective next higher or next lower set value of the selected parameter is set by trend actuation of a pulse generator (1) with activated function key (6 to 15) in the direction "higher" or "lower" and indicated at the same time and wherein this operation is repeated until the correspondingly selected parameter has the desired value, characterised in that the actual value indicated in the rest state is a voltage actual value, the respective function key (6 to 15) remains activated for as long as it is depressed, the pulse generator (1) is a scroll wheel, the respective next higher or next lower set value is set in that it is read out of a fixed memory and filed in a non-volatile second memory, and when the desired parameter value is reached, the respective function key (6 to 15) depressed until then and thus activated is de-activated by being released, the set parameter value is stored at the same time and the actual voltage value is indicated again.

2. Method according to claim 1, characterised in that in the rest state and before the single or repeated depression of a function key (6 to 15) the sum of the parameter values filed in the non-volatile memory is compared with the sum of the actual set values of these parameters, if the compared values do not agree, a fault report is activated and the delivery of control pulses is blocked until the sum of the compared values agrees again after new parametering of all set values and the fault report is deactivated, and after the reading out of the respective next higher or next lower set value the sum of all set values is recomputed and likewise filed in the non-volatile memory.

## Revendications

1. Procédé de paramétrage d'un régulateur numérique de tension comportant un affichage numérique (2) et des touches fonctionnelles pour commander un transformateur équipé d'un commutateur de plots,
- une valeur réelle étant affichée à l'état de repos,
- l'enfoncement unique ou répété d'une touche fonctionnelle (6-15) identifiant et sélectionnant le paramètre respectif associé de manière interne au régulateur,
- on affiche la valeur réglée du paramètre associé à la touche fonctionnelle activée (6-15),
- en actionnant la tendance d'un générateur d'impulsions (1) en activant la touche fonctionnelle (6-15) dans le sens « montée » ou « descente » on règle la valeur de réglage voisine, supérieure ou inférieure du paramètre sélectionné et on l'affiche en même temps, et
- on répète cette opération jusqu'à ce que le paramètre sélectionné possède la valeur souhaitée,
caractérisé en ce que
la valeur réelle affichée à l'état de repos est toujours une valeur réelle de tension,
- la touche fonctionnelle (6-15) respective reste actionnée aussi longtemps qu'elle est enfoncée,
- le générateur d'impulsions (1), est une molette de déroulement,
- la valeur réglée, suivante, respective, au-dessus ou en dessous se règle en extrayant cette valeur d'une mémoire fixe et en l'enregistrant dans une seconde mémoire non-fugitive,
- lorsqu'on atteint la valeur souhaitée du paramètre on désactive la touche fonctionnelle respective (6-15) enfoncée jusqu'alors et ainsi activée, en libérant cette touche et en même temps, on mémorise la valeur réglée du paramètre et on affiche de nouveau la valeur réelle de la tension.

2. Procédé selon la revendication 1,
caractérisé en ce qu'
au repos, avant l'enfoncement unique ou répété d'une touche fonctionnelle (6-15), on compare la somme des paramètres enregistrée dans la mémoire non-fugitive à la somme de la valeur réelle, réglée de ce paramètre,
- si les valeurs ne correspondent pas, on active un signal de défaut et on bloque l'émission des impulsions de commande jusqu'après un nouveau paramétrage de toutes les valeurs de réglage, la somme des valeurs comparées se correspondent et on désactive le signal de défaut, et
- après libération de la valeur de réglage suivante, plus haute ou plus basse, on calcule de nouveau la somme de toutes les valeurs réglées et on enregistre également dans la mémoire non-fugitive.
